# EUROPEAN PATENT APPLICATION

(11) **EP 2 442 015 A1**
(43) Date of publication of application: **18.04.2012**
(21) Application number: 10785860.7
(22) Date of filing: 28.01.2010
(51) Int. Cl.: F21V 9/08, F21S 2/00, G02B 3/08, G02B 5/20, F21Y 101/00, F21Y 101/02

(54) **LIGHT IRRADIATION DEVICE AND INSPECTION DEVICE**

(30) Priority: 12.06.2009 JP 2009141594
(71) Applicant: Sharp Kabushiki Kaisha, Osaka-shi, Osaka 545-8522 (JP)
(72) Inventor: NAKAMURA, Atsushi, Osaka 545-8522 (JP); MINAMI, Kohji, Osaka 545-8522 (JP)
(74) Representative: Müller - Hoffmann & Partner
(86) International application number: PCT/JP2010/000481
(87) International publication number: WO 2010/143328

(57) **Abstract**

A light radiation device that radiates light with a desired spectrum and controlled directivity is provided. A light radiation device (100) according to the present invention includes: a light source (101); an optical waveguide (107); and a spectrum modulating member (104), the optical waveguide (107) guiding incident light from the light source (101) thereinto through a plane of incidence, causing the light to be reflected by sides of the optical waveguide (107), and emitting directivity-controlled light through a plane of emission, the spectrum modulating member (104) attenuating a spectrum in a particular band of wavelengths among the directivity-controlled light, the optical waveguide (107) becoming narrower from the plane of emission toward the plane of incidence, the spectrum modulating member (104) being provided toward the plane of emission of the optical waveguide (107).

## Description

### Technical Field

The present invention relates to: a light radiation device for irradiating an object with a highly directional light; and an inspection apparatus.

### Background Art

Conventionally, attempts have been made to obtain light with a desired spectrum by using an optical filter. In particular, in a light source device for highly accurately reproducing a spectral distribution of sunlight, an air mass filter is generally used to give light with a desired spectrum.

Patent Literature 1 discloses a pseudo-sunlight radiation device that can make an illumination distribution in an object to be measured uniform by using a reflecting plate to reflect and diffuse pseudo-sunlight having passed through an optical filter with a lamp such as a xenon lamp turned on.

### Citation List

Patent Literature 1
   Japanese Patent Application Publication, Tokukai, No. 2003-28785 A (Publication Date: January 29, 2003)

### Summary of Invention

### Technical Problem

However, the radiation device described in Patent Literature 1 cannot give desired characteristics.

Specifically, the radiation device described in Patent Literature 1 does not control the directivity of light that is transmitted or reflected by the optical filter. For this reason, especially in a configuration in which an optical filter constituted by a multilayer film is used, the desired characteristics cannot be obtained, because the multilayer film has dependency on angles of incidence and therefore the characteristics of the optical filter are underutilized in the case of radiation of light with uncontrolled directivity.

The present invention has been made in view of the problems with the conventional technology, and it is an object of the present invention to provide: a light radiation device that radiates light with a desired spectrum and controlled directivity; and an inspection apparatus including such a light radiation device.

### Solution to Problem

In order to solve the foregoing problems, a light radiation device according to the present invention is a light radiation device including: a light source; at least one optical waveguide; and a spectrum modulating member, the at least one optical waveguide guiding incident light from the light source thereinto through a plane of incidence, causing the light to be reflected by sides of the at least one optical waveguide, and emitting directivity-controlled light through a plane of emission, the spectrum modulating member attenuating a spectrum in a particular band of wavelengths among the directivity-controlled light, the at least one optical waveguide becoming narrower from the plane of emission toward the plane of incidence, the spectrum modulating member being provided toward the plane of emission of the at least one optical waveguide.

According to the foregoing configuration, where the spectrum modulating member for attenuating a spectrum in a particular band of wavelengths is provided toward the plane of emission of the at least one optical waveguide, light that enters the spectrum modulating member is a highly directional light whose distribution of angles of radiation has been controlled within a desired range. This makes it possible to minimize the effect of the dependency of the spectrum modulating member on angles of incidence. Therefore, the foregoing configuration makes it possible to provide a light radiation device that radiates light with a desired spectrum and controlled directivity.

A second light radiation device according to the present invention includes: such a light radiation device as mentioned above; and a second optical waveguide, the light radiation device guiding directivity-controlled light toward the second optical waveguide, the second optical waveguide emitting the directivity-controlled light through a plane of emission thereof.

The foregoing configuration makes it possible to radiate a highly directional light over a wider range.

An inspection apparatus according to the present invention is a color filter inspection apparatus for inspecting transmission characteristics of a color filter including an array of pixels arranged alternately in a periodic pattern on a surface of a transparent substrate, each of the pixels being colored with a primary color in light of R, G, or B, the color filter inspection apparatus including such a light radiation device that radiates directivity-controlled pseudo-sunlight, the transmission characteristics of the color filter being inspected with light that is emitted from the light radiation device.

The configuration, which includes the light radiation device according to the present invention, makes it possible to inspect the transmission characteristics of a color filter with higher accuracy.

A solar battery panel inspection apparatus according to the present invention for measuring output characteristics of a solar battery pane includes such a light radiation device that radiates directivity-controlled pseudo-sunlight, the output characteristics of the solar battery panel being inspected with light that is emitted from the light radiation device.

The configuration, which includes the light radiation device according to the present invention, makes it possible to measure the output characteristics of a solar battery panel with higher accuracy.

For a fuller understanding of the nature and advantages of the invention, reference should be made to the ensuing detailed description taken in conjunction with the accompanying drawings.

### Advantageous Effects of Invention

Use of an optical waveguide according to the present invention and a light radiation device including such an optical waveguide brings about an effect of making it possible to provide a light radiation device that radiates light with a desired spectrum and controlled directivity.

It should be noted that a light radiation device according to the present invention provided with a spectrum modulating member for generating pseudo-sunlight can radiate a highly directional pseudo-sunlight over a wide range.

### Brief Description of Drawings

Fig. 1

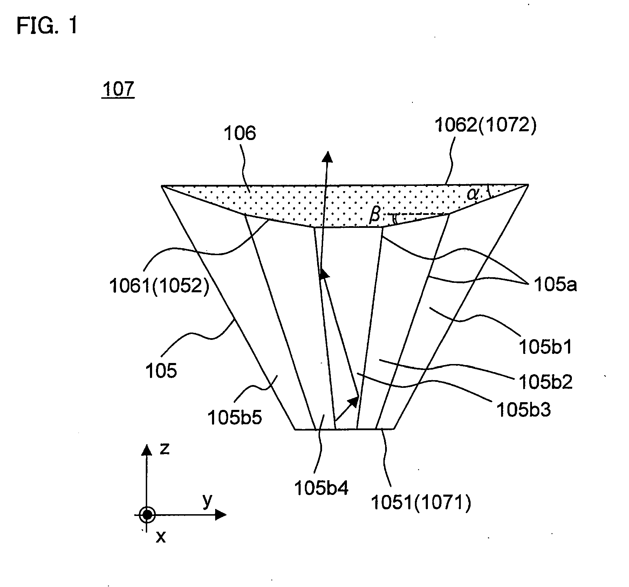

   Fig. 1, which shows one embodiment of the present invention, is a front view schematically showing the structure of an optical waveguide that constitutes a light radiation device according to the present invention.
Fig. 2

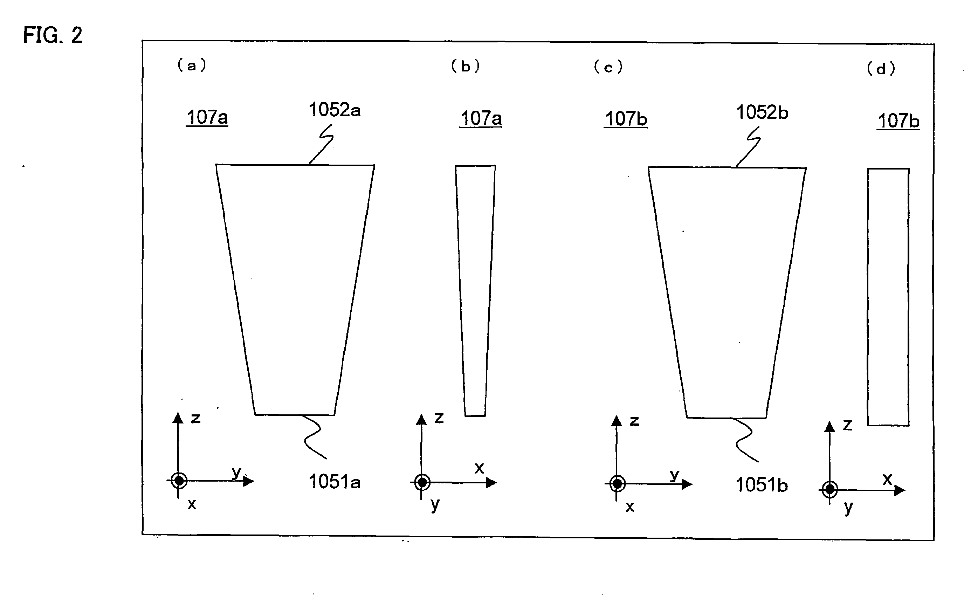

   Fig. 2 shows another embodiment of the present invention, (a) being a front view schematically showing the structure of an optical waveguide that constitutes a light radiation device according to the present invention, the optical waveguide having its inner region undivided and having all its sides tapered, (b) being a side view schematically showing the structure of the optical waveguide of (a), (c) being a front view schematically showing the structure of an optical waveguide that constitutes a light radiation device according to the present invention, the optical waveguide having its inner region undivided and having a pair of opposed surfaces tapered and the other surfaces non-tapered, (d) being a side view schematically showing the structure of the optical waveguide of (c).
Fig. 3

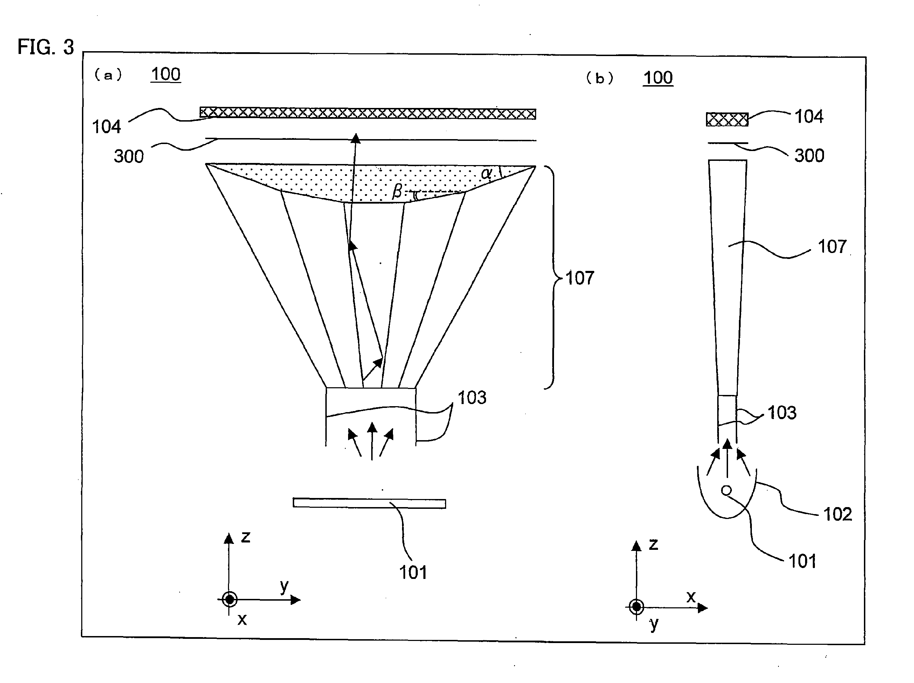

   Fig. 3 shows another embodiment of the present invention, (a) being a front view schematically showing the configuration of a light radiation device according to the present invention, (b) being a side view schematically showing the configuration of the light radiation device.
Fig. 4

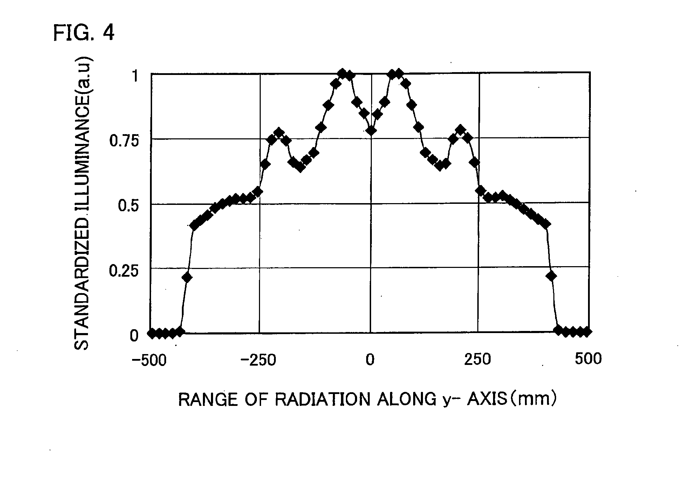

   Fig. 4 is a graph showing an illumination distribution of light that in another embodiment of the present invention is emitted from an optical waveguide having its inner part divided into five inner parts by planes of reflection.
Fig. 5

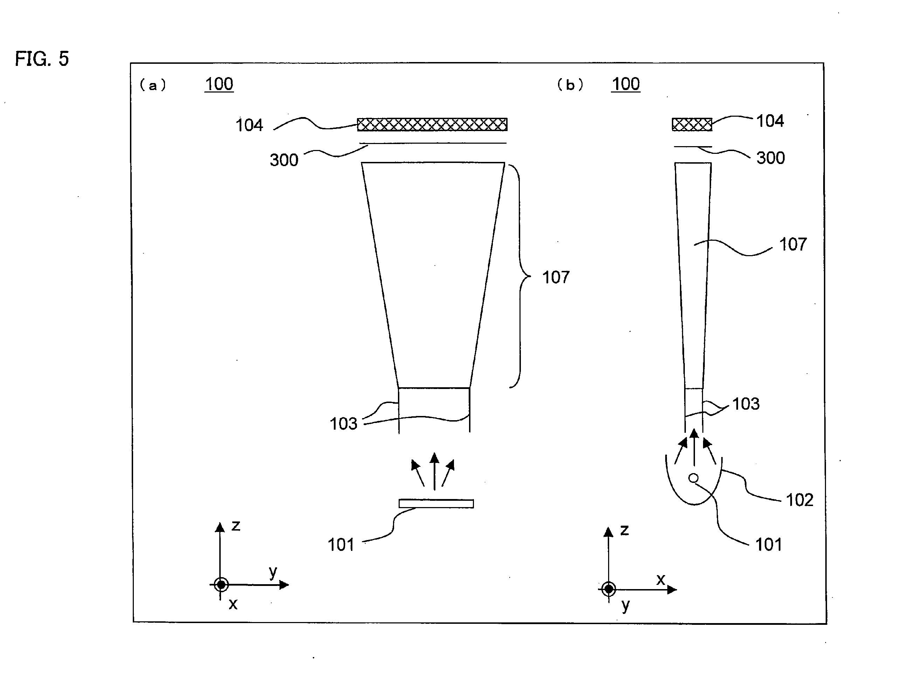

   Fig. 5 shows another embodiment of the present invention, (a) being a front view schematically showing the configuration of a light radiation device according to the present invention, (b) being a side view schematically showing the configuration of the light radiation device.
Fig. 6

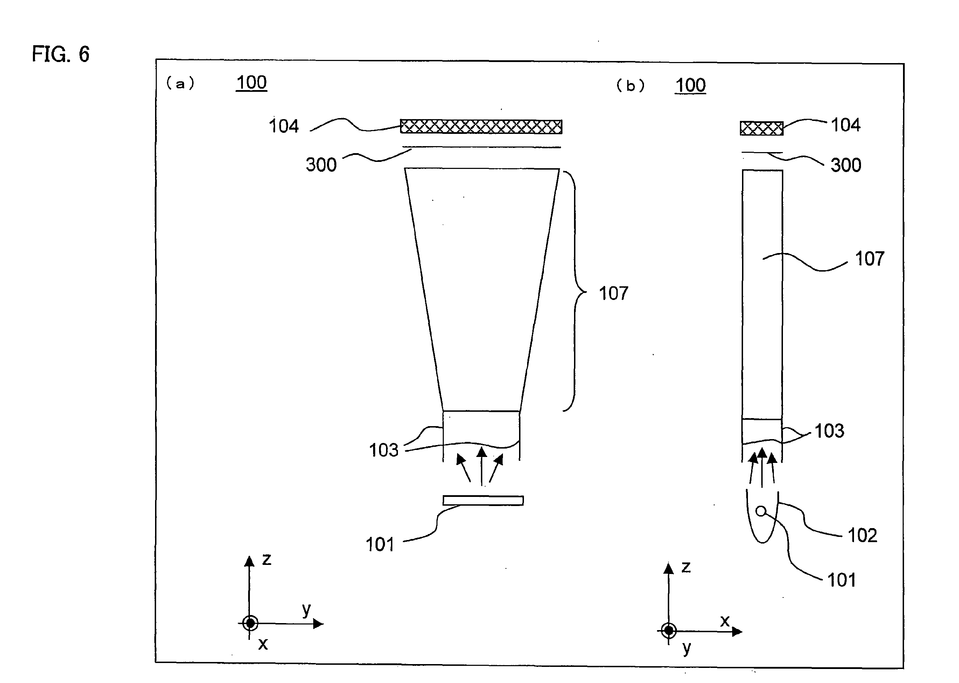

   Fig. 6 shows another embodiment of the present invention, (a) being a front view schematically showing the configuration of a light radiation device according to the present invention, (b) being a side view schematically showing the configuration of the light radiation device.
Fig. 7

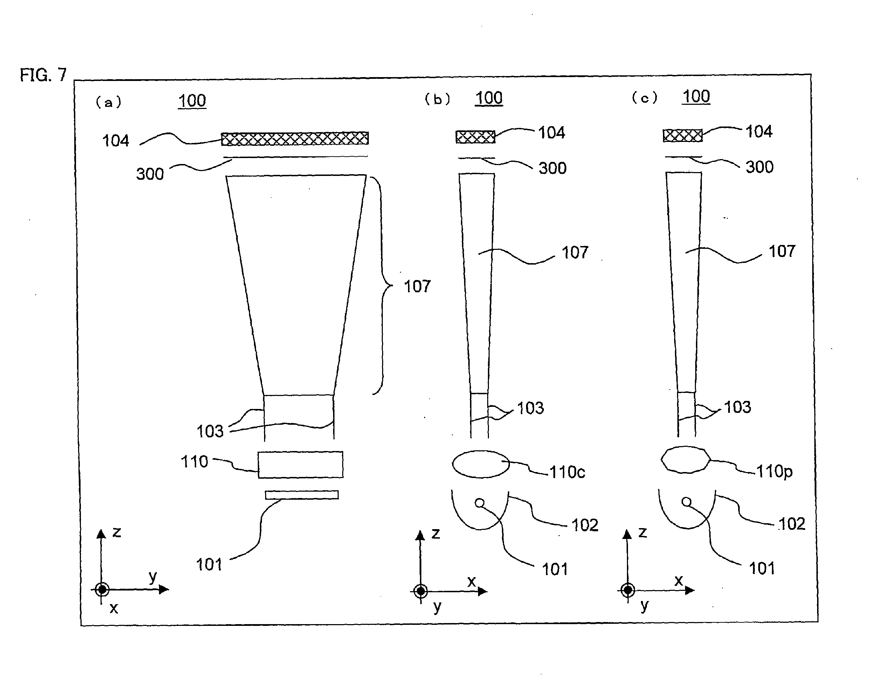

   Fig. 7 shows another embodiment of the present invention, (a) being a front view schematically showing the configuration of a light radiation device according to the present invention, (b) being a side view schematically showing the configuration of such a light radiation device using a cylindrical lens as an optical element, (c) being a side view schematically showing the configuration of such a light radiation device using a prism as an optical element.
Fig. 8

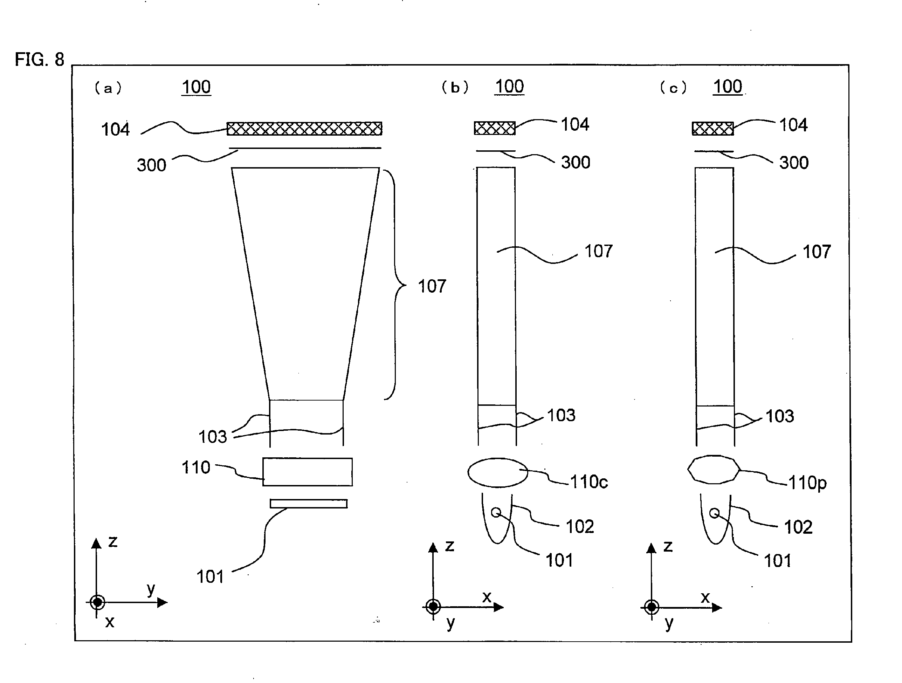

   Fig. 8 shows another embodiment of the present invention, (a) being a front view schematically showing the configuration of a light radiation device according to the present invention, (b) being a side view schematically showing the configuration of such a light radiation device using a cylindrical lens as an optical element, (c) being a side view schematically showing the configuration of such a light radiation device using a prism as an optical element.
Fig. 9

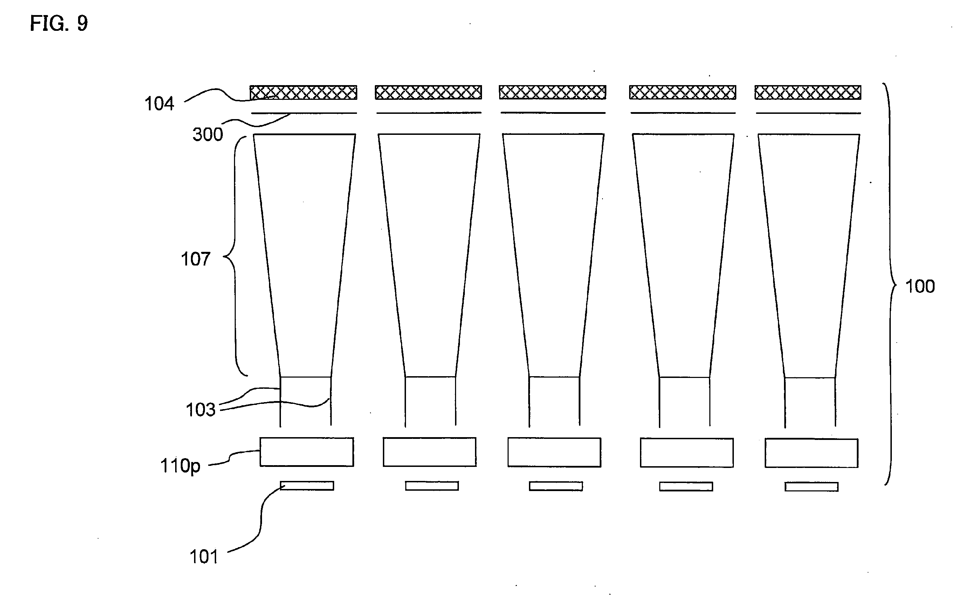

   Fig. 9, which shows another embodiment of the present invention, is a front view schematically showing the configuration of an array arrangement of light radiation devices according to the present invention.
Fig. 10

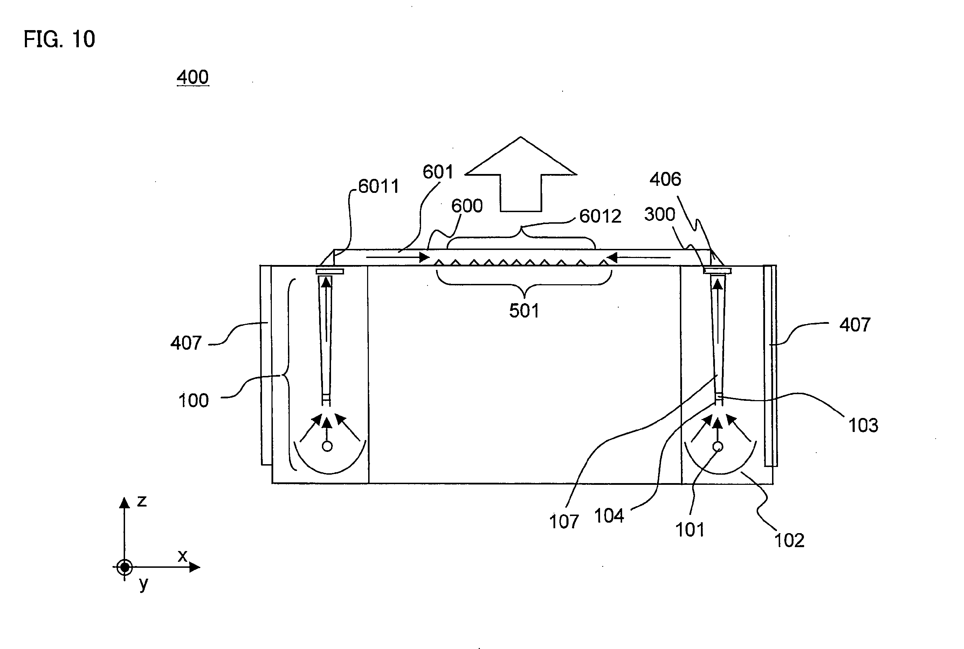

   Fig. 10, which shows another embodiment of the present invention, schematically shows the configuration of a second light radiation device including light radiation devices according to the present invention.
Fig. 11

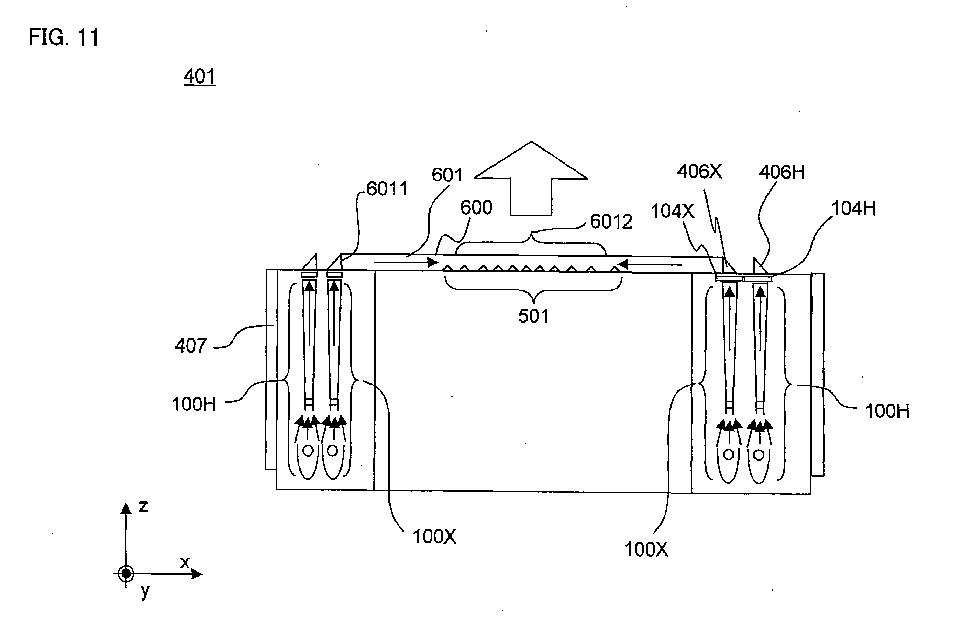

   Fig. 11, which shows another embodiment of the present invention, schematically shows the configuration of a pseudo-sunlight radiation device including light radiation devices according to the present invention.
Fig. 12

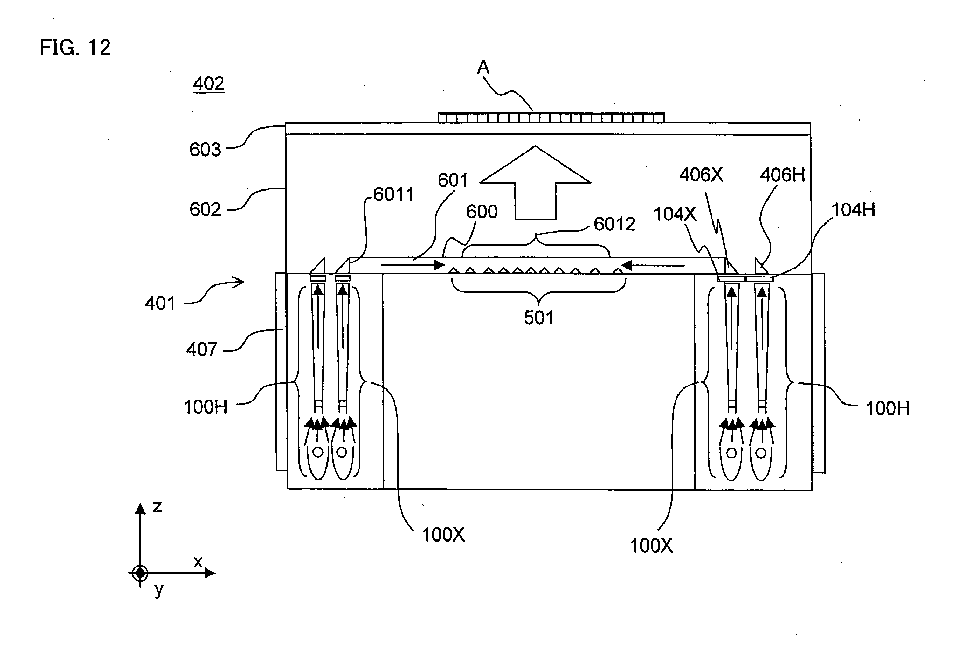

   Fig. 12, which shows another embodiment of the present invention, schematically shows the configuration of an inspection apparatus including pseudo-sunlight radiation devices according to the present invention.
Fig. 13

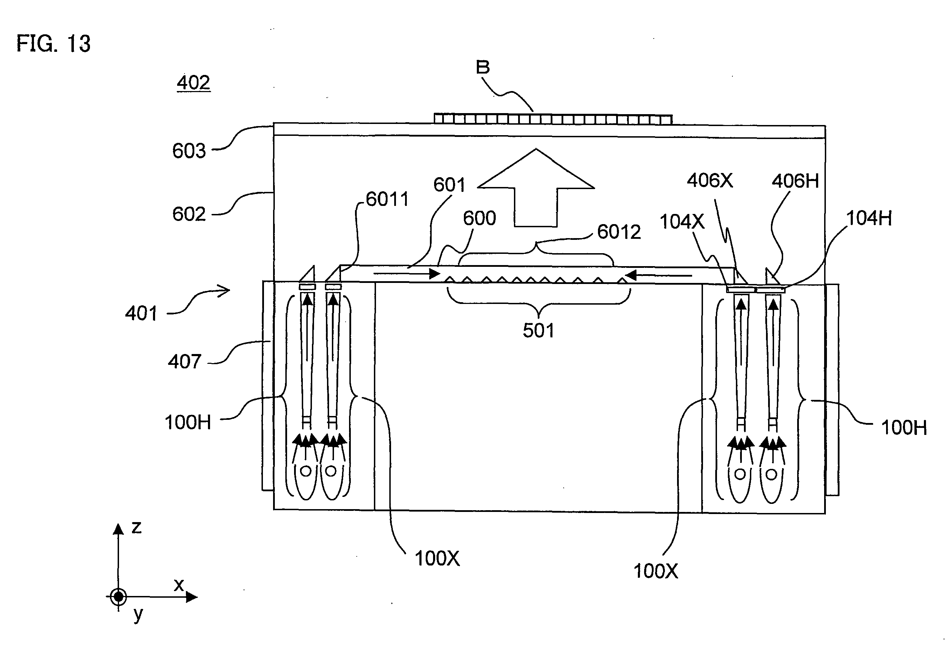

   Fig. 13, which shows another embodiment of the present invention, schematically shows the configuration of an inspection apparatus including pseudo-sunlight radiation devices according to the present invention.
Fig. 14

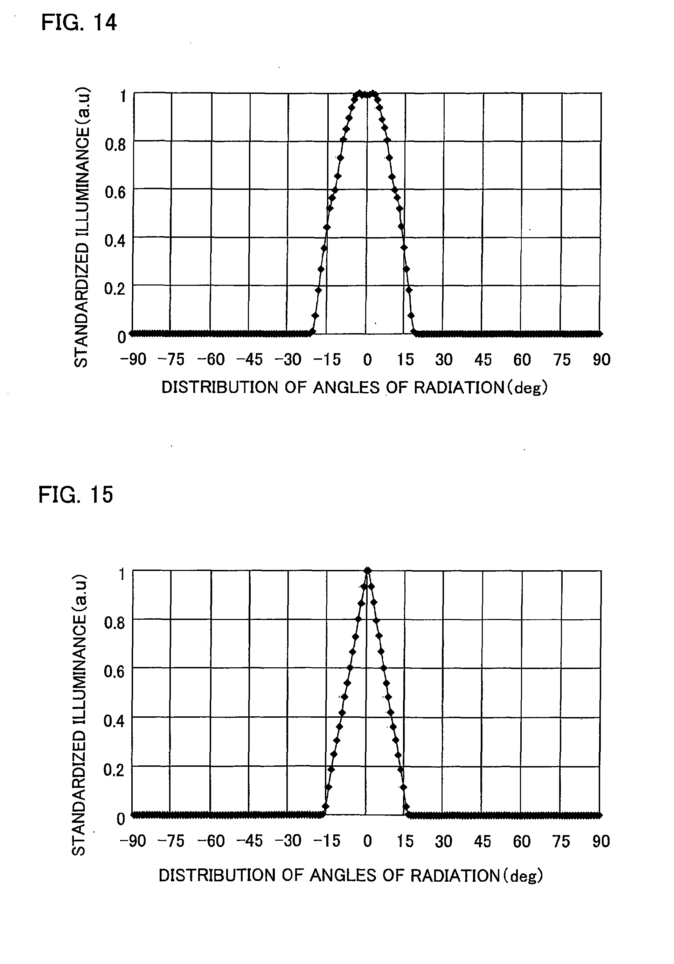

   Fig. 14 is a graph showing a distribution of angles of radiation along a long side of a plane of emission of an optical waveguide according to one embodiment of the present invention.
Fig. 15
   Fig. 15 is a graph showing a distribution of angles of radiation along a short side of a plane of emission of an optical waveguide according to one embodiment of the present invention.
Fig. 16

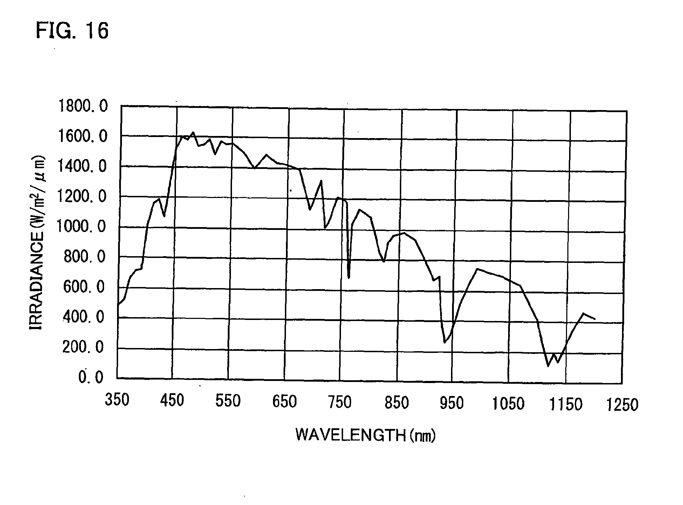

   Fig. 16 is a graph showing an example of a spectrum of pseudo-sunlight.

### Description of Embodiments

Embodiments of the present invention are described below; however, the present invention is not limited to these embodiments.

It should be noted that the range "A to B" in this specification means "not less than A to not more than B".

### [1. Optical Waveguide]

An example of the configuration of an optical waveguide 107 that constitutes a light radiation device according to one embodiment of the present invention is described with reference to a front view shown in Fig. 1. The optical waveguide 107 controls the directivity of incident light by causing the incident light to be reflected by sides of the optical waveguide 107, and emits the directivity-controlled light through a plane of emission 1072.

The sides of the optical waveguide 107 become gradually wider from a plane of incidence 1051 toward a plane of emission 1052; that is to say, the sides of the optical waveguide 107 are "tapered". The shape of the optical waveguide 107 is not particularly limited as long as it is "tapered".

Therefore, the optical waveguide 107 may be circular or polygonal in the shape of its cross-section parallel to the plane of incidence 1051 or the plane of emission 1052.

The shape of the plane of incidence 1051 or the plane of emission 1052 of the optical waveguide 107 is appropriately determined according to the type of optical waveguide. For example, as will be described below in the embodiments, in cases where light that is emitted from the optical waveguide 107 is combined with a second optical waveguide, it is preferable that the shape(s) of the plane of incidence 1051 and/or the plane of emission 1052 of the optical waveguide 107 be rectangular. Alternatively, in cases where a circular spotlight or a polygonal spotlight is desired, it is preferable that the shape(s) of the plane of incidence 1051 and/or the plane of emission 1052 of the optical waveguide 107 be circular or polygonal.

In the present embodiment, where the optical waveguide 107 is tapered, the incident light propagates while being repeatedly reflected by the sides of the optical waveguide 107. Accordingly, a distribution of angles of radiation of the light that is emitted from the optical waveguide 107 can be controlled within a desired range.

Furthermore, the plane of emission 1052 of the optical waveguide 107 is provided with an optical element 106 having a plane of incidence 1061 substantially equal in size to the plane of emission 1052. The optical element 106 emits light that is smaller in angle of radiation than the incident light, and has a refractive index different from the refractive index of the optical waveguide 107. The provision of the optical waveguide 107 with the optical element 106 makes it possible to further control an angle of incidence of light with respect to an irradiated surface.

It should be noted that the phrase "refractive index of the optical waveguide 107" in the present embodiment means the refractive indices of inner regions 105b1 to 105b5 of the optical waveguide 107. It should also be noted that the inner regions 105b1 to 105b5 of the optical waveguide 107 in this specification are referred to collectively as "inner region 105b of the optical waveguide 107".

For example, when the inner region 105b is an air layer, the "refractive index of the optical waveguide 107" is approximately 1.00; and when the inner region 105b is a glass layer (optical glass: FK1), the "refractive index of the optical waveguide 107" is approximately 1.47.

Examples of the optical element 106 include optical glass: BK-7 (with a refractive index of 1.51) and optical glass: SF-2 (with a refractive index of 1.64), but are not particularly limited as long as the optical element 106 has a refractive index different from the refractive index of the optical waveguide 107.

The refractive index of the inner region 105b of the optical waveguide 107 and the refractive index of the optical element 106 may be appropriately combined for any purpose.

For example, although in the present embodiment the air layer is used as the inner region 105b of the optical waveguide 107 and the optical glass: BK-7 is used as the optical element 106, the present invention is not limited to this embodiment. As an example of a combination other than that described above, the optical glass: FK1 can be used as the inner region 105b of the optical waveguide 107, and the optical glass: SF-2 can be used as the optical element 106.

Further, the shape of the optical element 106 only needs to be determined according to the combination of the refractive index of the inner region 105b of the optical waveguide 107 and the refractive index of the optical element 106. The shape of the optical element 106 is not particularly limited as long as the optical element 106 emits light that is smaller in angle of radiation than the incident light, but it is preferable that at least either the plane of incidence 1061 or the plane of emission 1062 be a curved surface.

The "curved surface" here is not particularly limited as long as it is a bent surface, i.e., such a surface that a tangent passing through a given point on the curved surface has different angles of inclination with respect to the plane of incidence 1051 of the optical waveguide 107, and is a surface shaped in such a way as to be able to emit light that is smaller in angle of radiation than light incident on the optical element 106. Therefore, for example, a curved surface that is formed from a plurality of flat surfaces, as well as a quadric surface such as a spherical surface, an elliptical surface, a cylindrical surface, or an elliptically cylindrical surface is encompassed in the scope of curved surfaces in this specification. It should be noted that the "curved surface that is formed from a plurality of flat surfaces" means such a curved surface shown in Fig. 1 as the plane of incidence 1061 of the optical element 106.

Furthermore, the respective flat surfaces that constitute the "curved surface that is formed from a plurality of flat surfaces" may have different angles of inclination with respect to the plane of incidence 1051 of the optical waveguide 107 as in the case of the plane of incidence 1061 of the optical element 106 in Fig. 1. In cases where the inner region 105b of the optical waveguide 107 is divided into a plurality of inner regions 105b by planes of reflection 105a as will be described below, the inner regions 105b differ in distribution of angles of radiation of light that is emitted therefrom. Therefore, the angles of inclination of the respective flat surfaces, which constitute the "curved surface that is formed from a plurality of flat surfaces", with respect to the plane of incidence 1051 of the optical waveguide 107 are adjusted so that the angle of radiation of light that is emitted from the optical element 106 is smaller than the angle of radiation of light that comes from the plane of emission 1052 of each inner region 105b, whereby the directivity of the light that is emitted from the optical waveguide 107 can be further enhanced.

A specific example of the shape of the optical element 106 is given here. Let it be assumed that the refractive index of the inner region 105b of the optical waveguide 107 is A, that the refractive index of the optical element 106 is B, and that A is less than B (A < B). Then, the angle of radiation of light that is emitted through the plane of emission 1062 of the optical element 106 can be made smaller than the angle of radiation of light incident on the optical element 106, for example, by placing the plane of incidence 1061, which has any of the following shapes (i) to (iii), of the optical element 106 opposite the plane of incidence 1051 of the optical waveguide 107.

Specific examples of such a shape of the optical element 106 are (i) a structure in which the plane of emission 1062 of the optical element 106 is concave, (ii) a structure in which the plane of incidence 1061 of the optical element 106 is convex, or (iii) a structure in which the plane of incidence 1061 of the optical element 106 is convex and the plane of emission 1062 is concave, in a direction parallel to the optical axis of light that is emitted through the plane of emission 1052 of the optical waveguide 107 and a plane that is large in angle of radiation of light.

Meanwhile, when A is greater than B (A > B), the angle of radiation of light that is emitted through the plane of emission 1062 of the optical element 106 can be made smaller than the angle of radiation of light incident on the optical element 106, for example, by placing the plane of incidence 1061, which has any of the following shapes (iv) to (vi), of the optical element 106 opposite the plane of incidence 1051 of the optical waveguide 107.

Specific examples of such a shape of the optical element 106 are (iv) a structure in which the plane of emission 1062 of the optical element 106 is convex, (v) a structure in which the plane of incidence 1061 of the optical element 106 is concave, or (vi) a structure in which the plane of incidence 1061 of the optical element 106 is concave and the plane of emission 1062 is convex, in a direction parallel to the optical axis of light that is emitted through the plane of emission 1052 of the optical waveguide 107 and a plane that is large in angle of radiation of light.

When A is equal to B (A = B), the directivity of light can be enhanced by changing the curvature, angle of inclination of the surface, plane of incidence 1061, and plane of emission 1062 of the optical element 106 so that a desired angle of radiation is obtained.

However, the present invention is not limited to the aforementioned shape of the optical element 106. Substantially the same effects are obtained as in the embodiment, so long as the optical element 106 is shaped in such a way as to emit light that is smaller in angle of radiation than the incident light.

Further, although in the embodiment of Fig. 1 the optical element 106 is provided on the plane of emission 1052 of the optical waveguide 107, the present invention is not limited to this embodiment. Substantially the same effects are obtained as in the present embodiment, so long as the optical element 106 is provided on at least either the plane of incidence 1051 or the plane of emission 1052 of the optical waveguide 107.

Further, as in the embodiment of Fig. 1, the optical waveguide 107 may further include planes of reflection 105a by which the inner region 105b of the optical waveguide 107 is divided into a plurality of inner regions 105b along light guiding directions indicated by arrows in Fig. 1. Light having entered the optical waveguide 107 propagates while being repeatedly reflected internally by the inner regions 105b, divided from one another by the planes of reflection 105a, of the optical waveguide 107. An increase in the number of inner regions 105b into which the inner region 105b of the optical waveguide 107 is divided leads to an increase in the number of times the light having entered the optical waveguide 107 is reflected internally, thus further restricting the angle of radiation of light that is emitted. Therefore, an increase in the number of inner regions 105b into which the inner region 105b of the optical waveguide 107 is divided leads to an increase in directivity of light that is radiated.

In the embodiment of Fig. 1, the angles of inclination of the planes of reflection 105a with respect to the plane of incidence of the optical waveguide 107 differ between the vicinity of the center of the optical waveguide 107 and the vicinity of the sides of the optical waveguide 107. Accordingly, the inner regions 105b divided from one another by the planes of reflection 105a differ in distribution of angles of radiation of light that is emitted therefrom. Therefore, the directivity of light that is emitted from the optical waveguide 107 can be further enhanced simply by further adjusting the shape of the optical element 106 so that the angle of radiation of light that is emitted from the optical element 106 is made smaller than the angle of radiation of light that comes from the plane of emission of 1052 of each inner region 105b.

In the embodiment of Fig. 1, the plane of incidence 1061 of the optical element 106 is in contact with the inner regions 105b on the plane of emission 1052 of the optical waveguide 107. Moreover, the angle of inclination α of the plane of incidence 1061 of the optical element 106 with respect to the plane of incidence 1051 of the optical waveguide 107 in an area of contact with each of the inner regions 105b1 and 105b5, the angle of inclination β of the plane of incidence 1061 of the optical element 106 with respect to the plane of incidence 1051 of the optical waveguide 107 in an area of contact with each of the inner regions 105b2 and 105b4, and the angle of inclination of the plane of incidence 1061 of the optical element 106 with respect to the plane of incidence 1051 of the optical waveguide 107 in an area of contact with the inner region 105b3 are designed to be different from one another.

The distribution of angles of radiation of the light that is emitted through the plane of emission 1072 of the optical waveguide 107 can be further controlled by placing the plane of incidence 1061, which has such a shape, of the optical element 106 on the plane of emission 1052 of the optical waveguide 107 opposite the plane of incidence 1051.

It should be noted that the optical waveguide 107 is not particularly limited as long as it has inner sides that reflect light.

Further, in cases where the optical waveguide 107 further includes the planes of reflection 105a, the number of inner regions 105b into which the inner region 105b of the optical waveguide 107 is divided can be appropriately determined according to the "desired range of angles of radiation", the "range of angels of incident light", the "size of the planes of incidence", the "size of the planes of emission", the "whole length of the tapered optical waveguide", and the like. The division of the inner region 105b of the optical waveguide 107 into two or more inner regions 105b by the planes of reflection 105a leads to an increase in the number of times light is reflected in the optical waveguide 107. This makes it possible, as a result, to further enhance the directivity of light.

The planes of reflection 105a are not particularly limited in material or shape as long as the planes of reflection 105a can reflect light. As such, the planes of reflection 105a may be made of the same material as the sides of the optical waveguide 107, or may be made of a different material.

Further, the distribution of angles of radiation of light can be controlled within the desired range by changing the angles of inclination of the planes of reflection 105a with respect to the plane of incidence 1051 of the optical waveguide 107. This makes it possible, as a result, to radiate a highly directional light.

It should be noted that the present invention is not limited to the combination and shapes described in the embodiment of Fig. 1. The combination of the refractive index of the optical waveguide 107 and the refractive index of the optical element 106 and their respective shapes may be appropriately selected so that the distribution of angles of radiation of light that is emitted from the optical waveguide 107 can be controlled within the desired range.

Further, although in Fig. 1 the inner region 105b of the optical waveguide 107 is divided into a plurality of inner regions 105b by planes of reflection 105a, the inner region 105b of the optical waveguide 107 do not need to be divided into a plurality of inner regions 105b by planes of reflection 105a. Specifically, as shown in (a) of Fig. 2, the optical waveguide 107 may have its inner region undivided and have all its sides tapered. Further, as shown in (c) of Fig. 2, the optical waveguide 107 may have its inner region undivided and have a pair of opposed surfaces tapered and the other surfaces non-tapered.

### [2. Light Radiation Device]

### (Embodiment 1)

An example of the configuration of a light radiation device 100 according a first embodiment of the present invention is described with reference to a front view and a side view respectively shown in (a) and (b) of Fig. 3. It should be noted that an optical waveguide 107 provided in the light radiation device 100 is the same in structure as that described in "1. Optical Waveguide" and, as such, is not described here.

The light radiation device 100 according to the present embodiment includes a light source 101, a spectrum modulating member 104, an optical waveguide 107, a mirror 103, a reflector 102, and an amount-of-light adjusting member 300.

In the light radiation device 100, light emitted from the light source 101 is focused by the reflector 102 toward the optical waveguide 107 according to the present invention. It should be noted here that the mirror 103 is provided to a plane of incidence 1071 (see Fig. 1) of the optical waveguide 107 perpendicularly to the plane of incidence 1071 (see Fig. 1) so that the light from the light source 101 is efficiently introduced into the optical waveguide 107.

The light reflected by the mirror 103 is introduced into the optical waveguide 107, and then emitted through the plane of emission 1072 (see Fig. 1) with a controlled distribution of angles of radiation. Unevenness of radiation of the light thus emitted is homogenized by the amount-of-light adjusting member 300 provided toward the plane of emission of the optical waveguide 107, and then passes through the spectrum modulating member 104, provided toward the plane of emission of the optical waveguide 107. As a result, the transmittance of light of in a particular band of wavelengths, among the light incident on the spectrum modulating member 104, is attenuated, and light having a particular spectral distribution is generated and then passed through the irradiated surface.

The components are described below in detail.

The light source 101 is not particularly limited, and can be appropriately selected for any purpose. Examples of the light source 101 include a xenon lamp, a halogen lamp, a UV lamp, a metal halide lamp, and an LED.

Further, although in the embodiment of (a) of Fig. 3 one spectrum modulating member 104 is provided toward the plane of emission of the optical wavelength 107, the present invention is not limited to this embodiment. The configuration of the light radiation device 100 makes it possible to radiate a highly directional light even in cases where no spectrum modulating member 104 is provided. However, the provision of a spectrum modulating member 104 in at least one place on the optical path of light that is emitted from the optical waveguide 107 makes it possible to radiate light with high directivity and a desired spectrum. It should be noted that a plurality of spectrum modulating members 104 may be provided.

Further, as shown in Fig. 3, the light radiation device according to the present embodiment is a light radiation device including such an optical waveguide 107 as shown in Fig. 1, but may use such an optical waveguide 107a as shown in (a) of Fig. 2 or such an optical waveguide 107b as shown in (c) of Fig. 2 instead. It should be noted that the optical waveguide 107 is hereinafter described sometimes as a concept that encompasses both the optical waveguide 107a and the optical waveguide 107b.

Further, as shown in (b) of Fig. 3, the optical waveguide 107 is also tapered along its thickness. However, in cases where it is not necessary to control directivity along the thickness, the optical waveguide 107 does not need to be tapered along its thickness.

The spectrum modulating member 104 is not particularly limited as long as it functions to attenuate the transmittance of light from the light source 101 in a particular band of wavelengths and give a spectral distribution by generating light with a desired spectral distribution. Examples of the spectrum modulating member 104 include various types of optical filter such as an air mass filter, a high-pass filter, and a low-pass filter, and can be appropriately selected for use for any purpose.

The provision of the spectrum modulating member 104 in the light radiation device 100 makes it possible to radiate light with a given spectrum. It is possible to use one type of spectrum modulating member 104 alone, or to use two or more types of spectrum modulating member 104 in combination.

In cases where such an optical filter is provided as the spectrum modulating member 104, it is desirable, in order to utilize the characteristics of the optical filter, that the optical filter be placed so that its surface is perpendicular to the optical axis.

For example, use of an air mass filter (AM filter) as the spectrum modulating member 104 makes it possible to generate pseudo-sunlight with a spectrum in a wavelength range of approximately 350 nm to approximately 1,100 nm.

The "air mass" (hereinafter referred to as "AM") here is an index that represents the extent of length over which sunlight has passed through the earth's atmosphere, and indicates the extent of attenuation of sunlight energy incident on each place on the ground, on the assumption that AM0 is the extent of attenuation of sunlight energy outside the earth's atmosphere and AM1 is the extent of attenuation of sunlight energy incident right on the equator.

For example, Japan corresponds to AM1.5. A greater numerical value of air mass means a greater length over which sunlight passes through the earth's atmosphere. A greater length over which sunlight passes through the earth's atmosphere means that light is likely to be diffused or absorbed by water drops in the air and, accordingly, sunlight energy is greatly attenuated by the time it reaches the ground.

The air mass filter is a filter by which a wide-spectrum light from a halogen lamp, a xenon lamp, or the like is made similar to pseudo-sunlight by a multilayer film in consideration of the aforementioned attenuation of sunlight energy (spectrum) by the effect of the atmosphere. More specifically, use of an AM1.5 air mass filter makes it possible to obtain pseudo-sunlight corresponding to AM 1.5.

Use of such a light radiation device 100 including a spectrum modulating member 104 makes it possible to radiate pseudo-sunlight. When the spectrum modulating member 104 is a type of optical filter that uses a multilayer film, there is dependency on angles of incidence on the multiplayer film. Therefore, in cases where the spectrum modulating member 104 is irradiated with light from the aforementioned lamp or the like with uncontrolled directivity, a component that is large in angle of incidence on the multilayer film becomes unable to exhibit the innate characteristics of the spectrum modulating member 104. That is, control of the directivity of light incident on the spectrum modulating member 104 makes it possible, for example, to cut light in a desired band of wavelengths or to increase the degree of coincidence with a spectrum of pseudo-sunlight.

The light radiation device 100 according to the present invention uses such an optical waveguide 107 as described in "1. Optical Waveguide" and enhances the directivity of emitted light from the optical waveguide 107, and therefore can lessen the impact of the dependency on angles of incidence on the multilayer film. Therefore, the innate characteristics of the spectrum modulating member 104 can be exhibited, and light in an intended band of wavelengths can be blocked or the degree of coincidence with a spectrum of pseudo-sunlight can be increased.

It should be noted that the term "pseudo-sunlight" in this specification means light that has a spectrum similar to that of reference sunlight whose spectral irradiance has been defined by the JIS (JIS C8911) for the purpose of evaluating the output characteristics of solar battery cells.

Fig. 16 is a graph showing an example of a spectrum of pseudo-sunlight. In this specification, the term "pseudo-sunlight" means light that has such a spectrum as shown in Fig. 16.

Further, in the embodiment of Fig. 3, the amount-of-light adjusting means 300 is provided toward the plane of emission of the optical waveguide 107 from the point of view of remedying unevenness of illuminance of light radiated from the optical waveguide 107.

An illumination distribution on a surface irradiated with light with use of an optical waveguide according to the present invention is shown here in Fig. 4.

Fig. 4 is a graph showing an illumination distribution obtained with an optical waveguide 107 having its inner part divided into five inner parts by planes of reflection as shown in Fig. 1.

Whereas the directivity of light that propagates through the optical waveguide is controlled by repetitions of internal reflection, there occurs unevenness of illuminance in the vicinity of the center and sides (planes of reflection) of each tapered optical waveguide. This is because the repetitions of reflection of the light causes a change in angle of radiation of the light and the change results in a relative increase in amount of light in the vicinity of the sides of the optical waveguide.

Therefore, as shown in Fig. 4, the occurrence of unevenness of illuminance is confirmed in the vicinity of the four planes of reflection and in the vicinity of the sides of the optical waveguide. Provision of a transmittance-adjusted filter in accordance with the unevenness of illuminance makes it possible to make the illuminance uniform on the irradiated surface.

In the embodiment of (a) of Fig. 3, where the amount-of-light adjusting member 300 is provided toward the plane of emission of the optical waveguide 107, such unevenness of illuminance in the vicinity of planes of reflection and in the vicinity of the center as mentioned above is remedied, so that the illuminance is homogenized.

The amount-of-light adjusting member 300 is not particularly limited as long as it is a member that can restrict the transmittance of light and adjust the amount of light. Usable examples of the amount-of-light adjusting member 300 include a light-blocking net, a light-blocking tape, a light-blocking sheet, and a light-blocking filter. For example, the standardized illuminance of each region on the irradiated surface is calculated in accordance with information contained in a graph showing such an illuminance distribution as shown in Fig. 4.

The transmittance of the amount-of-light adjusting member 300 is computed in accordance with the standardized illuminance, and the amount-of-light adjusting member 300 is divided hypothetically. Illuminance homogenization can be realized by controlling, with use of the amount-of-light adjusting member 300 thus fabricated, the transmittance of light that passes through each inner region 105b of the optical waveguide 107.

It should be noted that although in the embodiment of (a) of Fig. 3 one amount-of-light adjusting member 300 is provided toward the plane of emission of the optical waveguide 107, the present invention is not limited to this embodiment. The configuration of the light radiation device 100 makes it possible to radiate a highly directional light even in cases where no amount-of-light adjusting member 300 is provided. However, the provision of an amount-of-light adjusting member 300 in at least one place on the optical path of light that is emitted from the light source 101 makes it possible to radiate light with high directivity and uniform illuminance. Therefore, from the point of view of remedying unevenness of illuminance of light radiated from the optical waveguide 107, it is preferable that at least one amount-of-light adjusting member 300 be provided toward the plane of emission of the optical waveguide 107. It should be noted that a plurality of amount-of-light adjusting members 300 may be provided for any purpose. In this case, it is possible to use two or more types of amount-of-light adjusting member 300 in combination.

Further, although not shown, the light radiation device 100 may have light-blocking means, provided in the optical path of light that is emitted from the light source 101, which serves as a measure against stray light. Examples of the light-blocking means include materials of which optical absorbers are made.

Although the light radiation device of Fig. 3 uses such an optical waveguide 107 as shown in Fig. 1, the light radiation device of Fig. 3 may be configured as such a light radiation device 100 as shown in Fig. 5 or 6 with use of such an optical waveguide as shown in (a) or (c) of Fig. 2, as long as desired directivity and a desired illuminance distribution are obtained.

Fig. 5 shows a light radiation device 100 including an optical waveguide 107 having all its sides tapered as shown in (a) of Fig. 2. Fig. 6 shows a light radiation device 100 including an optical waveguide 107 having some of its sides tapered as shown in (c) of Fig. 2.

In the light radiation device 100 of Fig. 6, when light enters the optical waveguide 107, the directivity of the light along the x axis (along the thickness) of the optical waveguide 107 is controlled by the optical member and the reflecting members, and the directivity of the light along the y axis in the drawing can be controlled by the optical waveguide 107.

Further, in the light radiation device 100 of Fig. 5 or 6, it is possible, in order to enhance the directivity of the light along the x axis in the drawing, that when light enters the optical waveguide 107, the light is guided toward the optical waveguide 107 after the directivity of the light along the thickness of the optical waveguide 107 is enhanced by the optical element 110 as shown in Fig. 7 or 8.

As an optical element 110, a lens or a prism can be used. (b) of Fig. 7 and (b) of Fig. 8 each show a light radiation device 100 configured to use a cylindrical lens 110c as the optical element 110. Light emitted from the light source 101 is reflected by the reflector 102 and then enters the cylindrical lens 110c. The light enters the optical waveguide 107 after the directivity of the light along the thickness of the optical waveguide 107 is enhanced by the cylindrical lens 110c.

In the light radiation device 100 of (b) of Fig. 7, the directivity of the light along the thickness of the optical waveguide 107 can be further enhanced by the effect of the optical waveguide 107 being tapered along its thickness.

It should be noted that although in each of the light radiation devices 100 of (b) of Fig. 7 and (b) of Fig. 8 the cylindrical lens 110c is used as the optical element 110, a prism may be used as the optical element 110. (c) of Fig. 7 and (c) of Fig. 8 each show a light radiation device 100 configured to use a prism 110p as the optical element 110.

Light emitted from the light source 101 is reflected by the reflector 102 and then enters the prism 110p. The light, which has entered the prism 110p, enters the optical waveguide 107 after the directivity of the light along the thickness of the optical waveguide 107 is enhanced by the effect of refraction of the prism 110p. It should be noted here that in the light radiation device 100 of (c) of Fig. 7, the directivity of the light along the thickness of the optical waveguide 107 can be further enhanced by the effect of the optical waveguide 107 being tapered along its thickness.

Further, in order to radiate a highly directional light over a wider range, light radiation devices 100 may be arranged in an array. Similarly, a plurality of optical waveguides 107 joined together, e.g., a plurality of optical waveguides 107 bonded together to constitute a light radiation device 100 may be provided.

Fig. 9 schematically shows the configuration of an array arrangement of light radiation devices 100 each constituted by a light source 101, a prism 110p, a mirror 103, an amount-of-light adjusting member 300, and a spectrum modulating member 104 as shown in Fig. 8.

Such a configuration makes it possible to radiate light over a wide range with high directivity and uniform illuminance. In the configuration of an array arrangement of light radiation devices 100, the light radiation devices 100 may be configured in any of the aforementioned manners.

Further, in the configuration of Fig. 9, the optical waveguide 107, the light source 101, the amount-of-light adjusting member 300, the spectrum modulating member 104, and the like are in one-to-one correspondence with one another. However, for example, in the case of use of a light source that is longer than that of Fig. 8, a plurality of optical waveguides 107 may be disposed for each light source, or vice versa.

Further, in the case of use of an amount-of-light adjusting member 300 and a spectrum modulating member 104 that are longer than those of Fig. 8, a plurality of optical waveguides 107 may be disposed for each adjusting member 300 and each spectrum modulating member.

Use of a light radiation device 100 configured as described above makes it possible to irradiate an irradiated surface with light of high directivity and uniform illuminance. Further, use of an air mass filter as the spectrum modulating member 104 makes it possible to radiate pseudo-sunlight with high directivity and uniform illuminance.

### (Embodiment 2)

An example of the configuration of a light radiation device 400 according to a second embodiment of the present invention is described with reference to a front view shown in Fig. 10. It should be noted that an optical waveguide 107 and a light radiation device 100 including such an optical waveguide 107 are the same in structure/configuration as those described in "1. Optical Waveguide" and "2. Light Radiation Device" and, as such, are not described here.

A light radiation device 400 according to the present embodiment includes such light radiation devices 100 as mentioned above and a second optical waveguide 600. The light radiation device 400 is intended to radiate light over a wider range than the light radiation device 100 of Embodiment 1.

In the light radiation device 400, light emitted from each light radiation device 100 is introduced into the second optical waveguide 600 through a plane of incidence 6011.

That is, light whose directivity has been controlled by an optical waveguide 107 (hereinafter referred to as "first optical waveguide") provided in each light radiation device 100 is introduced into the second optical waveguide 600. Provided inside of the second optical waveguide 600 is a light-extracting structure 501 for emitting the introduced light. The light diffused by the light-extracting structure 501 is passed through the irradiated surface via a plane of emission 6012 of the second optical waveguide 600. Use of such a light radiation device 400 including a second optical waveguide 600 makes it possible to radiate a highly directional light over a wider range.

The light-extracting structure 501 is not particularly limited as long as it can emit light introduced into the second optical waveguide 600. For example, the light-extracting structure 501 may be such a "prism structure" constituted by a plurality of substantially triangular prisms as shown in the embodiment of Fig. 10. Further, for example, a mixture of diffused fine particles into a transparent resin may be patterned on an optical waveguide by printing, and the shape thereof may be a line pattern or a dot shape (sparse and dense dots, dots small and large in diameter).

The components are described below in detail. In the embodiment of Fig. 10, the light radiation device 400 has two light radiation devices 100 opposed to each other with the second optical waveguide 600 interposed therebetween.

The position of each light radiation device 100 in the light radiation device 400 is not particularly limited. However, as shown in Fig. 10, in cases where the direction of light that is emitted from the light radiation device 100 needs to be changed so that the light is introduced into the second optical waveguide 600, a prism 406 may be further provided between each light radiation device 100 and a plane of incidence of 6011 of the second optical waveguide 600 so as to guide, toward the plane of incidence of 6011 of the second optical waveguide 600, the light emitted from the light radiation device 100.

Further, the light radiation devices 100 constituting the light radiation device 400 only need to be as described above in the embodiment, and may be arranged in an array as shown in Fig. 9.

It should be noted that although in the embodiment of Fig. 10 each prism 406 is in the shape of a substantially triangular prism, the present invention is not limited to this embodiment. The shape of each prism 406 is not particularly limited as long as it can introduce light into the second optical waveguide 600, and may have a surface provided, as needed, as a reflecting surface that reflects light. Further, the prism 406 may be coated in accordance with the wavelength of light to be radiated. The prism 406 may be a coated mirror. Further, although not shown, the prism 406 may have light-blocking means provided as needed therearound.

Further, in the embodiment of Fig. 10, the light-extracting structure 501, which diffuses light, is provided so as to emit light having entered the second optical waveguide 600.

In the present embodiment, the light-extracting structure 501 is constituted by a plurality of substantially triangular prisms. Each prism has a side in contact with the second optical waveguide 600. Adjacent prisms have opposed sides that are not in contact with the second optical waveguide 600. All the prisms are disposed so that their bottom surfaces are parallel to the same plane.

The light having entered the second optical waveguide 600 through each plane of incidence 6011 enters a side of each substantially triangular prism constituting the light-extracting structure 501, is diffused by the light-extracting structure 501, and then is emitted through the plane of emission 6012.

The directivity of light that enters the second optical waveguide 600 is controlled within a certain range by the light radiation devices 100. Therefore, uniformity of the shapes of the prisms constituting the light-extracting structure 501 makes it possible to emit a highly directional light through the plane of emission 6012.

Further, the density of light can be controlled by controlling intervals at which the prisms constituting the light-extracting structure 501 are placed. More specifically, in cases where all the prism have a given shape, unevenness of radiation can be remedied by placing them at longer and shorter intervals (sparsely and densely). Alternatively, in cases where the prisms are placed at regular intervals, unevenness of radiation can be remedied by making the prisms taller than one another from the periphery to the center of the light-extracting structure 501. Alternatively, unevenness of radiation may be remedied by using both of them. Further, an amount-of-light adjusting filter may be provided, as needed, so as to adjust the amount of light emitted from the second optical waveguide 600.

It should be noted, for example, that in the embodiment of Fig. 10, the light-extracting structure 501 can be configured to be constituted by 200 substantially triangular prisms arranged in parallel with one another at varying intervals of 10 mm to 0.3 mm.

Although the embodiment of Fig. 10 uses the second optical waveguide 600 provided with the light-extracting structure 501 serving as a structure for emitting light, the present invention is not limited to this embodiment. Substantially the same effects are obtained as the present embodiment, so long as the second optical waveguide 600 is such that light emitted from each light radiation device 100 and guided toward the second optical waveguide 600 is diffused inside of the second optical waveguide 600 and emitted through the plane of emission 6012.

Further, the present invention is not limited to the aforementioned shape of the light-extracting structure 501. Specifically, the size of the second optical waveguide 600, the shape of the light-extracting structure 501, and the range of disposition may be changed for the purpose of reducing the size of the whole device and/or controlling the range to be irradiated with light.

Further, the light radiation device 400 may be provided with a cooling device 407 for cooling the interior and components of the light radiation device 400.

### (Embodiment 3: Pseudo-sunlight Radiation Device)

An example of the configuration of a pseudo-sunlight radiation device (light radiation device) 401 according to a third embodiment of the present invention is described with reference to a front view shown in Fig. 11. It should be noted that an optical waveguide 107 and a light radiation device 100 including such an optical waveguide 107 are the same in structure/configuration as those described in "1. Optical Waveguide" and "2. Light Radiation Device" and, as such, are not described here.

In Fig. 11, the pseudo-sunlight radiation device 401 has two pairs of light radiation devices 100X and 100H with the light-extracting structure 501 interposed between the two pairs.

In the present embodiment, each of the light radiation devices 100X employs a xenon lamp as its light source, and each of the light radiation devices 100H employs a halogen lamp as its light source.

As for light radiated from the xenon lamp, a particular spectrum at a long-wave end is attenuated by a spectrum modulating member 104X; and as for light radiated from the halogen lamp, a particular spectrum at a short-wave end is attenuated by a spectrum modulating member 104H. As the respective spectrum modulating members, air mass filters are used so that when a mixture of these transmitted beams of light has a spectrum of pseudo-sunlight. Further, the amount of light that is made incident on each light radiation device is adjusted by an amount-of-light adjusting member (not shown).

The light transmitted through the spectrum modulating member 104X is introduced by a prism 406X through the plane of incidence 6011 of the second optical waveguide 600 toward the second optical waveguide 600. Similarly, the light transmitted through the spectrum modulating member 104H is introduced by a prism 406H through the plane of incidence 6011 of the second optical waveguide 600 toward the second optical waveguide 600.

Since the spectra of the beams of light that are radiated from the respective light sources are adjusted by the spectrum modulating members 104X and 104H, the pseudo-sunlight propagates through the second optical waveguide 600.

It should be noted that although Embodiment 3 uses the prisms 406 to guide, toward the plane of incidence 6011 of the second optical waveguide 600, beams of light emitted from the respective light radiation devices, the prisms 406 may be replaced by mirrors.

Further, in Fig. 11, each prism 406X is made to transmit light from the corresponding prism 406H. Further, the shape of each prism 406 is not particularly limited as long as it can introduce light into the second optical waveguide 600. The prism 406 may be coated in accordance with the wavelength of light to be radiated. The prism 406 may be a coated mirror. Further, although not shown, the prism 406 may have light-blocking means provided as needed therearound.

The light having entered the second optical waveguide 600 propagates through the optical waveguide, and is radiated toward the irradiated surface by the light-extracting structure 501 for emitting the introduced light.

Further, the light radiation devices 100H and 100X constituting the pseudo-sunlight radiation device 401 only need to be as described above in the embodiment, and may be arranged in an array as shown in Fig. 9.

Further, each cooling device 407 cools down the interior and components of the pseudo-sunlight radiation device 401.

### (Embodiment 4: Inspection Apparatus)

An example of an inspection apparatus 402 according to a fourth embodiment of the present invention is described with reference to a front view shown in Fig. 12.

It should be noted that an optical waveguide 107, a light radiation device 100 including such an optical waveguide 107, and a pseudo-sunlight radiation device 401 including such a light radiation device 100 are the same in structure/configuration as those described in "1. Optical Waveguide", "2. Light Radiation Device", and "3. Pseudo-sunlight Radiation Device" and, as such, are not described here.

Fig. 12 shows an inspection apparatus 402 that uses a pseudo-sunlight radiation device 401 of Embodiment 3 to measure the output characteristics (hereinafter referred to as "I-V characteristics") of a solar battery panel and inspect the I-V characteristics.

The inspection apparatus 402 has a housing 602 and a transparent member 603 provided to the pseudo-sunlight radiation device 401 of Embodiment 3. A solar battery panel A is conveyed to a predetermined position on the inspection apparatus 402 by a conveyance system (not shown). After that, a I-V characteristics measuring probe is placed on the solar battery panel A, and then the solar battery panel A is irradiated with pseudo-sunlight from the pseudo-sunlight radiation device 401. The solar battery panel A can be evaluated here by measuring the I-V characteristics of the solar battery panel A.

After the measurement of the I-V characteristics, the radiation of the pseudo-sunlight is stopped, and then the solar battery panel A is conveyed to the next step by the conveyance system (not shown). While the solar battery panel A is being conveyed to the next step, the interior and components of the pseudo-sunlight radiation device 401 are cooled down by the cooling devices 407. After that, the I-V characteristics of the following solar battery panel A are measured.

### (Embodiment 5)

An example of an inspection apparatus 402 according to a fifth embodiment of the present invention is described with reference to a front view shown in Fig. 13. It should be noted that an optical waveguide 107, a light radiation device 100 including such an optical waveguide 107, and a pseudo-sunlight radiation device 401 including such a light radiation device 100 are the same in structure/configuration as those described in "1. Optical Waveguide", "2. Light Radiation Device", and "3. Pseudo-sunlight Radiation Device" and, as such, are not described here.

The apparatus of Fig. 13 is an inspection apparatus 402 that uses a pseudo-sunlight radiation device 401 of Embodiment 3 to inspect the characteristics of a color filter including an array of pixels arranged alternately in a periodic pattern on a surface of a transparent substrate, each of the pixels being colored with a primary color in light of R, G, or B.

The inspection apparatus 402 has a housing 602 and a transparent member 603 attached to the pseudo-sunlight radiation device 401 of Embodiment 3. Further, a color filter B is conveyed to a predetermined position on the inspection apparatus 402 by a conveyance system (not shown). After that, the color filter B is irradiated with light from the pseudo-sunlight radiation device 401. The color filter B is evaluated here by measuring the respective spectral transmission factors of the colors R, G, and B from the color filter B.

After the measurement of the characteristics of the color filter B, the radiation of the light is stopped, and the color filter B is conveyed to the next step by the conveyance system (not shown). While the color filter B is being conveyed to the next step, the interior and components of the pseudo-sunlight radiation device 401 are cooled down by the cooling devices 407. After that, the characteristics of the following color filter B are measured.

The light radiation device according to the present invention is preferably configured such that the spectrum modulating member turns (i) light incident on the spectrum modulating member into (ii) light having a spectrum of pseudo-sunlight.

The foregoing configuration makes it possible to provide a light radiation device that radiates pseudo-sunlight with controlled directivity.

The light radiation device according to the present invention is preferably configured such that: the sides of the at least one optical waveguide include at least a pair of opposed sides; and the pair of opposed sides become gradually wider from the plane of incidence of the at least one optical waveguide toward the plane of emission.

According to the foregoing configuration, light having entered the at least one optical waveguide propagates while being repeatedly reflected between the pair of opposed sides. Therefore, a highly directional light whose distribution of angles of radiation has been controlled within a desired range can be made incident on the spectrum modulating member. This makes it possible, as a result, to radiate light with further controlled directivity.

The light radiation device according to the present invention is preferably configured such that: the sides of the at least one optical waveguide further include at least another pair of opposed sides; and the another pair of opposed sides are constant in width from the plane of incidence of the at least one optical waveguide toward the plane of emission.

According to the foregoing configuration, for example, in cases where the directivity of light along the thickness of the at least one optical waveguide on the plane of incidence is controlled, the width of the at least one optical waveguide along the thickness can be made constant. In such a case, the number of steps in fabrication of an optical waveguide is reduced. This makes it possible to fabricate a light radiation device more easily.

The light radiation device according to the present invention is preferably configured such that the at least one optical waveguide comprises a plurality of optical waveguides joined to one another.

The foregoing configuration makes it possible to radiate light over a wide range with high directivity and uniform illuminance.

The light radiation device according to the present invention is preferably configured such that the at least one optical waveguide comprises a plurality of optical waveguides arranged in an array.

The foregoing configuration makes it possible to radiate light over a wide range with high directivity and uniform illuminance. The phrase "arranged in an array" here means placing objects at regular intervals, and arranging the optical waveguides in an array means placing the optical waveguides at regular intervals.

The light radiation device according to the present invention is preferably configured such that the at least one optical waveguide has provided on at least either the plane of incidence or emission thereof an optical element for emitting light that is smaller in angle of radiation than the incident light.

According to the foregoing configuration, the optical element for reducing the angle of radiation of light that is emitted is provided on at least either the plane of incidence or emission of the at least one optical waveguide. Therefore, the angle of radiation of light that is emitted from the at least one optical waveguide can be controlled with high accuracy within a desired range. This makes it possible, as a result, to radiate light with higher directivity.

Further, the optical element is fixed to the at least one optical waveguide. This reduces the likelihood of loss in light due to such a problem with the conventional method as "displacement" or "error in assembly".

The light radiation device according to the present invention is preferably configured such that the optical element has at least either a plane of incidence or emission of the light as a curved surface.

The foregoing configuration makes it possible that the angle of radiation of light that is emitted from the light radiation device according to the present invention is controlled within a desired range.

The light radiation device according to the present invention is preferably configured such that the curved surface is formed from a plurality of flat surfaces.

The foregoing configuration makes it possible that the angle of radiation of light that is emitted from the light radiation device according to the present invention is controlled within a desired range.

The light radiation device according to the present invention is preferably configured so as to further include planes of reflection of light by which an inner part of the at least one optical waveguide is divided into a plurality of inner parts along light guiding directions.

According to the foregoing configuration, the inner part of the at least one optical waveguide is divided into a plurality of inner parts by the planes of reflection of light along the light guiding directions, the number of times light is reflected while it is propagating through the at least one optical waveguide becomes larger than in the case of an optical waveguide having its inner part undivided. Furthermore, because a distribution of angles of radiation can be controlled within a desired range with higher accuracy by adjusting the angle of inclination of each plane of reflection, the directivity of light can be controlled more highly.

The light radiation device according to the present invention is preferably configured so as to further include an amount-of-light adjusting member provided in at least one place on an optical path of light that is emitted from the light source.

The foregoing configuration makes it possible to adjust the illuminance of light with which an irradiated surface is irradiated, and also makes it possible to easily adjust the illuminance during maintenance such as lamp replacement. Furthermore, in a light radiation device provided with a plurality of such amount-of-light adjusting members, the illuminance on the irradiated surface can be held constant by adjusting the amount of light, even if there occurs unevenness of emission illuminance due to lot-to-lot variation in optical waveguides and/or lot-to-lot variation in lamps that are used as light sources.

It is preferable that: the light emitted from the second light radiation device be directivity-controlled pseudo-sunlight; and the second optical waveguide emit the pseudo-sunlight through the plane of emission thereof.

The foregoing configuration makes it possible to radiate a highly directional pseudo-sunlight over a wider range.

The present invention is not limited to the description of the embodiments above, but may be altered by a skilled person within the scope of the claims. An embodiment based on a proper combination of technical means disclosed in different embodiments is encompassed in the technical scope of the present invention. For example, it is possible to apply a pseudo-sunlight radiation device to evaluation of resistance to sunlight. Further, although the light sources have been realized by various types of lamp, the light sources may be realized by LEDs as needed.

### [Examples]

The present invention is explained below in concrete terms by way of examples; however, the present invention is not limited to these examples.

In the light radiation device 100 of (a) of Fig. 3, the optical waveguide 107 was structured in the same manner as the aforementioned optical waveguide 107 of Fig. 1. Further, the material for and shape of the optical waveguide 107 were designed so that not less than 90% of the total light that is emitted from the optical waveguide 107 falls within a range of angles of radiation of ± 15 degrees. Further, light was made incident on the optical waveguide 107 within a range of ±45 degrees.

Specifically, the whole length of the optical waveguide 107 was 450 mm. The plane of incidence 1051 of the optical waveguide 107 had an opening 250 mm long and 6 mm wide, and the plane of emission 1052 had an opening 800 mm long and 16 mm wide. The inner part of the optical waveguide 107 was divided into five inner regions 105b by planes of reflection 105a. The inner regions 105b were air layers.

The optical element 106 used was made of glass material having a refractive index of 1.51. The optical element 106 used was such that the shape of the plane of incidence 1061 was convex in a direction parallel to the optical axis of light that is emitted through the plane of emission 1052 of the optical waveguide 107 and a plane that is large in angle of radiation of light, and was 800 mm long and 16 mm wide so as to coincide with the opening of the plane of emission 1052 of the optical waveguide 107. A design was worked out so that the plane of incidence 1061 of the optical element 106 was inclined at different angles to the plane of incidence 1051 of the optical waveguide 107 in the respective inner regions 105b. Specifically, the settings were configured so that the angle of inclination α in each of the inner regions 105b1 and 105b5 was 28.5 degrees, that the angle of inclination β in each of the inner regions 105b2 and 105b4 was 22 degrees, and that the angle of inclination in the inner region 1053b was 0 degree.

The light source used was a non-directional xenon lamp, and the spectrum modulating member used was an air mass filter.

### (Characteristic Evaluation)

The results of evaluation of the characteristics of the optical waveguide of the present example are shown below. Fig. 14 is a graph showing a distribution of angles of radiation along a long side of the plane of emission 1072 of the optical waveguide 107 of the present example.

Similarly, Fig. 15 is a graph showing a distribution of angles of radiation along a short side of the plane of emission 1072 of the optical waveguide 107 of the present example.

As shown in Fig. 14, it was assumed that the long side of the plane of emission 1072 of the optical waveguide 107 of the present example, i.e., the z axis shown in (a) of Fig. 2 was at 0 degree and the y axis was set at ±90 degrees. Then, it was confirmed that 92% of the total illuminance of light fell within a range of ±15 degrees with respect to the y axis.

As shown in Fig. 15, it was assumed that the short side of the plane of emission 1072 of the optical waveguide 107 of the present example, i.e., the z axis shown in (b) of Fig. 2 was at 0 degree and the x axis was set at ±90 degrees. Then, it was confirmed that 99% of the total illuminance of light fell within a range of ±15 degrees with respect to the x axis.

From these results, it was confirmed that use of an optical waveguide of the present example makes it possible to enhance the directivity of light not only along a short side but also a long side of a plane of emission of the optical waveguide.

As stated above, since the light radiation device of the example has controlled directivity of light with respect to the optical axis (perpendicular to the plane of emission of the optical waveguide 107), the angle of incidence on the spectrum modulating member is made smaller. For this reason, light that enters the spectrum modulating member expresses less components diverging remarkably from the characteristics of the multiplayer film constituting the spectrum modulating member.

Therefore, the light radiation device of the example can fully utilize the characteristics of the multilayer film constituting the spectrum modulating member and, as a result, can radiate light with a desired spectrum or radiate light with a high degree of coincidence with a spectrum of pseudo-sunlight.

### Industrial Applicability

Use of optical waveguides according to the present invention makes it possible to radiate light with higher directivity. Therefore, the optical waveguides can be widely utilized in various types of industry for electronics to serve as: light sources of image reading devices that are used in copiers, scanners, and the like; electricity-removing light sources that use light to control charges on photoreceptors of copiers, printers, and the like; thin-shaped light sources for interior use; light sources of guide lights and the like; and light sources for use in apparatuses for inspecting color filters that are used in thin-shaped displays.

Further, a light radiation device according to the present invention provided with a spectrum modulating member for generating pseudo-sunlight can be used as a pseudo-sunlight radiation device. As such, the light radiation device can also be utilized as a light source for use in a solar simulator for evaluating the I-V characteristics of a solar battery panel. Further, it is possible to apply such light radiation devices, for example, to pseudo-sunlight radiation devices for: tests for measurement of various types of sun-powered device; accelerated deterioration tests; agricultural products; and evaluation of resistance to sunlight.

### Reference Signs List

- 100: Light radiation device
- 101: Light source
- 104: Spectrum modulating member
- 105a: Plane of reflection
- 105b: Inner region
- 1051: Plane of incidence
- 1052: Plane of emission
- 106: Optical element
- 1061: Plane of incidence
- 1062: Plane of emission
- 107: Optical Waveguide
- 1071: Plane of incidence
- 1072: Plane of emission
- 110: Optical element
- 110c: Cylindrical lens
- 110p: Prism
- 300: Amount-of-light adjusting member
- 400: Light radiation device
- 600: Second optical waveguide
- 601: Light guiding section
- 6011: Plane of incidence
- 6012: Plane of emission
- 501: Light-extracting structure

## Claims

1. A light radiation device comprising:
a light source;
at least one optical waveguide; and
a spectrum modulating member,
the at least one optical waveguide guiding incident light from the light source thereinto through a plane of incidence, causing the light to be reflected by sides of the at least one optical waveguide, and emitting directivity-controlled light through a plane of emission,
the spectrum modulating member attenuating a spectrum in a particular band of wavelengths among the directivity-controlled light,
the at least one optical waveguide becoming narrower from the plane of emission toward the plane of incidence,
the spectrum modulating member being provided toward the plane of emission of the at least one optical waveguide.

2. The light radiation device as set forth in claim 1, wherein the spectrum modulating member turns (i) light incident on the spectrum modulating member into (ii) light having a spectrum of pseudo-sunlight.

3. The light radiation device as set forth in claim 1, wherein:
the sides of the at least one optical waveguide include at least a pair of opposed sides; and
the pair of opposed sides become gradually wider from the plane of incidence of the at least one optical waveguide toward the plane of emission.

4. The light radiation device as set forth in claim 3, wherein:
the sides of the at least one optical waveguide further include at least another pair of opposed sides; and
the another pair of opposed sides are constant in width from the plane of incidence of the at least one optical waveguide toward the plane of emission.

5. The light radiation device as set forth in claim 1, wherein the at least one optical waveguide comprises a plurality of optical waveguides joined to one another.

6. The light radiation device as set forth in claim 1, wherein the at least one optical waveguide comprises a plurality of optical waveguides arranged in an array.

7. The light radiation device as set forth in any one of claims 1 to 6, wherein the at least one optical waveguide has provided on at least either the plane of incidence or emission thereof an optical element for emitting light that is smaller in angle of radiation than the incident light.

8. The light radiation device as set forth in claim 7, wherein the optical element has at least either a plane of incidence or emission of the light as a curved surface.

9. The light radiation device as set forth in claim 8, wherein the curved surface is formed from a plurality of flat surfaces.

10. The light radiation device as set forth in any one of claims 1 to 9, further comprising planes of reflection of light by which an inner part of the at least one optical waveguide is divided into a plurality of inner parts along light guiding directions.

11. The light radiation device as set forth in any one of claims 1 to 10, further comprising an amount-of-light adjusting member provided in at least one place on an optical path of light that is emitted from the light source.

12. A light radiation device comprising:
a light guide device as set forth in any one of claims 1 to 11; and
a second optical waveguide,
the light radiation device guiding directivity-controlled light toward the second optical waveguide,
the second optical waveguide emitting the directivity-controlled light through a plane of emission thereof.

13. The light radiation device as set forth in claim 12, wherein:
the light emitted from the light radiation device is directivity-controlled pseudo-sunlight; and
the second optical waveguide emits the pseudo-sunlight through the plane of emission thereof.

14. A color filter inspection apparatus for inspecting transmission characteristics of a color filter including an array of pixels arranged alternately in a periodic pattern on a surface of a transparent substrate, each of the pixels being colored with a primary color in light of R, G, or B,
the color filter inspection apparatus comprising a light radiation device as set forth in claim 13,
the transmission characteristics of the color filter being inspected with light that is emitted from the light radiation device.

15. A solar battery panel inspection apparatus for measuring output characteristics of a solar battery panel,
the solar battery panel inspection apparatus comprising a light radiation device as set forth in claim 13,
the output characteristics of the solar battery panel being inspected with light that is emitted from the light radiation device.
